# EUROPÄISCHE PATENTSCHRIFT

(11) **EP 2 488 782 B1**
(45) Veröffentlichungstag und Bekanntmachung des Hinweises auf die Patenterteilung: **16.05.2018**
(21) Anmeldenummer: 10801110.7
(22) Anmeldetag: 12.10.2010
(51) Int. Cl.: F16N 13/10

(54) **SCHMIERPUMPE UND SCHMIERMITTELVERSORGUNGSVERFAHREN**
LUBRICATING PUMP AND METHOD FOR SUPPLYING LUBRICANT
POMPE DE LUBRIFICATION ET PROCÉDÉ D'ALIMENTATION EN LUBRIFIANT

(30) Priorität: 12.10.2009 DE 202009013851 U
(43) Veröffentlichungstag der Anmeldung: 22.08.2012
(73) Patentinhaber: Triboserv GmbH & Co. Kg, 97505 Geldersheim (DE)
(72) Erfinder: WEIGAND, Michael, 97505 Geldersheim (DE); KOCH, Peter, 97505 Geldersheim (DE)
(74) Vertreter: Reichert & Lindner Partnerschaft Patentanwälte
(86) Internationale Anmeldenummer: PCT/DE2010/001207
(87) Internationale Veröffentlichungsnummer: WO 2011/044888

(56) Entgegenhaltungen:
- CA-A1- 920 518
- DE-C- 632 525
- FR-A- 860 370
- US-A- 2 312 304

## Beschreibung

Die Erfindung betrifft eine Schmierpumpe nach dem Oberbegriff des Anspruchs 1 und ein Schmiermittelversorgungsverfahren.

Schmiervorrichtungen, wie beispielsweise für Ketten und Zahnräder, benötigen eine Schmiermittelversorgung, die u.a. durch Verwendung einer Schmierpumpe realisiert sein kann.

Die DE 102006026274 offenbart eine selbsttätige Schmierpumpe, die an eine Druckleitung eines Hydraulikkreises mit wiederholt aufsteigendem oder konstantem Hydraulikdruck einer Maschine, wie einer Baumaschine mit einem Hydraulikhammer, anschließbar ausgestaltet ist, mit einem vom Hydraulikkreis antreibbar ausgebildeten Antriebskolben und einem mit dem Antriebskolben bewegungsübertragend verbundenen Förderkolben, der an eine mit Schmierstoff befüllbare, mit wenigstens einem Schmierstoffauslass der selbsttätigen Schmierpumpe verbundene Förderkammer grenzt, wobei der Antriebskolben doppelt wirkend mit zwei Antriebskammern ausgestaltet ist und wobei ein in den Hydraulikkreis schaltbares und vom Hydraulikdruck betätigbares Umschaltorgan vorgesehen ist, durch welches im Betrieb die Antriebskammern wechselweise mit der Druckleitung verbindbar sind.

Solche oder auch andere, aus der Praxis bekannte Schmierpumpen sind sehr aufwendig und/oder groß bauend, was alles dem Einsatz als Hilfsmittel entgegen steht.

Die Erfindung hat das Ziel, eine einfache, günstige und platzsparende Schmierung zu ermöglichen.

Dieses Ziel wird erfindungsgemäß mit einer Schmierpumpe nach dem Anspruch 1 erreicht.

Demnach wird durch die vorliegende Erfindung eine Schmierpumpe geschaffen, die zwei Schraubkolben enthält, von denen abwechselnd einer im Druckbetrieb und der andere im Saugbetrieb ist.

Vorzugsweise ist ein Getriebe für den gleichzeitigen Antrieb der beiden Schraubkolben enthalten, so dass abwechselnd einer im Druckbetrieb und der andere im Saugbetrieb ist. Dabei enthält das Getriebe ein Antriebsritzel, mit dem ein erstes, dem ersten Schraubkolben zugeordnetes Kolbenzahnrad angetrieben wird, das mit einem zweiten Kolbenzahnrad kämmt, das dem zweiten Schraubkolben zugeordnet ist, so dass sich die beiden Schraubkolben bei gleichsinnigem Schraubgewinde automatisch immer gegensinnig und vorzugsweise mit identischen Geschwindigkeiten drehen, so dass abwechselnd einer im Druckbetrieb und der andere im Saugbetrieb ist. Weiter ist dabei bevorzugt, dass jeder Kolben eine Schraubspindel enthält, die in einer im Gehäuse der Schmierpumpe ortsfesten Mutter geführt ist, die insbesondere eine Messingmutter ist. Alternativ kann mit Vorteil vorgesehen sein, dass das Getriebe ein Antriebsritzel, mit dem ein erstes Zwischenzahnrad kämmt, das wiederum mit einem ersten, dem ersten Schraubkolben zugeordneten Kolbenzahnrad und einem zweiten Zwischenzahnrad kämmt, das wiederum mit einem zweiten Kolbenzahnrad kämmt, das dem zweiten Schraubkolben zugeordnet ist, so dass sich die beiden Schraubkolben bei gleichsinnigem Schraubgewinde automatisch immer gegensinnig und vorzugsweise mit identischen Geschwindigkeiten drehen, so dass abwechselnd ein Schraubkolben im Druckbetrieb und der andere Schraubkolben im Saugbetrieb ist. Das Ritzel und die Kolbenzahnräder oder ggf. die Zwischenzahnräder und die Kolbenzahnräder haben vorzugsweise eine derartige Kombination an axialen Längen, dass sie in jeder axialen Endstellung der Spindeln in ihren zugehörigen Muttern in Eingriff sind.

Ferner kann mit Vorzug vorgesehen sein, dass die Schraubkolben in ihren Kolbenendbereichen mit insbesondere elastischen Dichtungen, wie vorzugsweise O-Ringen, versehen sind, um in ihrem jeweiligen Ausgabekanal abgedichtet zu sein. In weiterer vorteilhafter Ausgestaltung kann mit Vorzug vorgesehen sein, dass für jede elastische Dichtung, wie vorzugsweise für jeden O-Ring, eine die elastische Dichtung am Schraubkolben umgebende Hülse vorgesehen und so am Schraubkolben angeordnet ist, dass sich die elastische Dichtung, wenn sie bedingt durch die axiale Stellung des entsprechenden Schraubkolbens außerhalb des jeweiligen Ausgabekanals ist, jedenfalls dann innerhalb der entsprechenden Hülse befindet, wenn die Einführung der elastischen Dichtung in den jeweiligen Ausgabekanal bevorsteht, und dass jede Hülse einen Innendurchmesser hat, der zumindest im Wesentlichen gleich dem Innendurchmesser des zugehörigen Ausgabekanals ist.

Es ist auch bevorzugt, wenn für jeden Schraubkolben ein Ausgabekanal vorgesehen ist, dessen Auslass mit einem Rückschlagventil versehen ist, um einen Rückfluss von Schmiermittel in den Ausgabekanal beim Saugbetrieb des zugehörigen Schraubkolbens zu verhindern. Alternativ oder zusätzlich ist mit Vorzug vorgesehen, dass für jeden Schraubkolben ein Ausgabekanal vorgesehen ist, dessen Eintrittsöffnung zur jeweiligen oder für beide Schraubkolben gemeinsamen Ansaugkammer hin mit einer Entlastungsnut versehen ist.

Noch weiter ist vorzugsweise ein Motor, wie insbesondere ein Gleichstrom-Elektromotor vorgesehen, der enthält oder dem zugeordnet ist eine Drehrichtungsumkehrsteuerung, der insbesondere eine Sensorik zugeordnet ist, mittels der das Erreichen wenigstens zweier Endstellungen der insgesamt vier Endstellungen der beiden Schraubkolben detektierbar ist oder detektiert wird, um entsprechend durch die Drehrichtungsumkehrsteuerung des Motors letzteren zur Drehrichtungsumkehr zu steuern, wenn ein Schraubkolben eine Endstellung erreicht.

Verfahrensmäßig wird ein Schmiermittelversorgungsverfahren nach dem Anspruch 12 geschaffen, wobei ein erster Schraubkolben in einem Saugbetrieb ist, während ein zweiter Schraubkolben in einem Druckbetrieb ist und umgekehrt, und wobei die beiden Schraubkolben über ein gemeinsames Getriebe angetrieben werden, das für jeden Schraubkolben ein Kolbenzahnrad enthält.

Davon ausgehend kann mit Vorzug weiter vorgesehen sein, dass die Kolbenzahnräder miteinander kämmen und sich dadurch gegensinnig drehen, oder dass das Getriebe den Kolbenzahnrädern vorgeschaltete Zwischenzahnräder enthält, die so konfiguriert sind, dass sich die Kolbenzahnrädern dadurch gegensinnig drehen.

Eine weitere bevorzugte Verfahrensvariante besteht darin, dass die Schraubkolben in ihren Kolbenendbereichen mit insbesondere elastischen Dichtungen, wie vorzugsweise O-Ringen, versehen sind, um in ihrem jeweiligen Ausgabekanal abgedichtet zu sein, und dass die Dichtungen jedenfalls vor ihrem Eintritt in ihren jeweiligen Ausgabekanal jeweils innerhalb einer den entsprechenden Schraubkolben umgebenden Hülse vorgespannt sind.

Ferner kann vorzugsweise vorgesehen sein, dass beim Eintritt eines Schraubkolbens in seinen Ausgabekanal im Druckbetrieb über eine Entlastungsnut am Rand der Einmündung des Ausgabekanals zur jeweiligen oder für beide Schraubkolben gemeinsamen Ansaugkammer hin eine Druckentlastung erfolgt.

Weitere bevorzugte und/oder vorteilhafte Ausgestaltungen der Erfindung ergeben sich aus den abhängigen Ansprüchen und deren Kombinationen sowie den gesamten vorliegenden Anmeldungsunterlagen und insbesondere den Erläuterungen und Darstellungen von Ausführungsbeispielen in der Beschreibung und der Zeichnung.

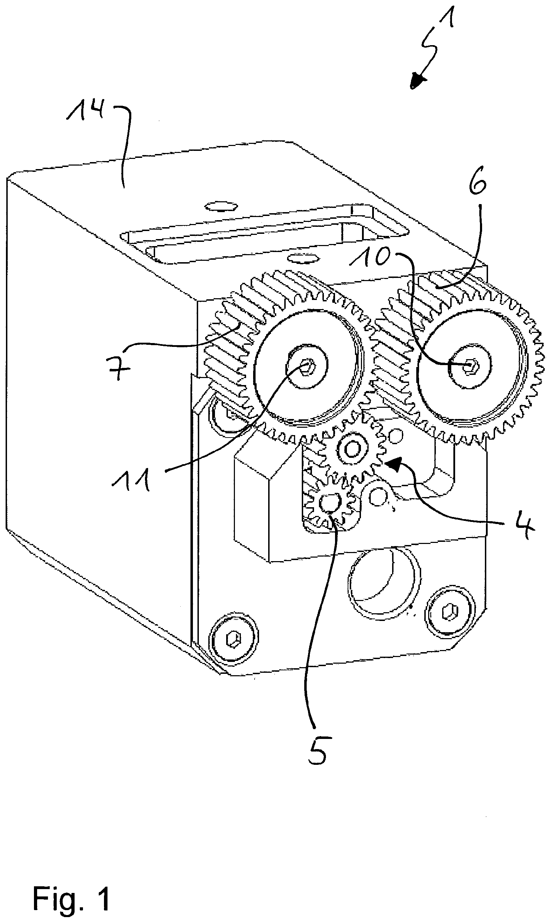

Die Erfindung wird anhand von Ausführungsbeispielen nachfolgend unter Bezugnahme auf die Zeichnung lediglich exemplarisch näher erläutert, in der
- Fig. 1: eine schematische perspektivische Ansicht eines ersten Ausführungs-beispiels einer Schmierpumpe zeigt,

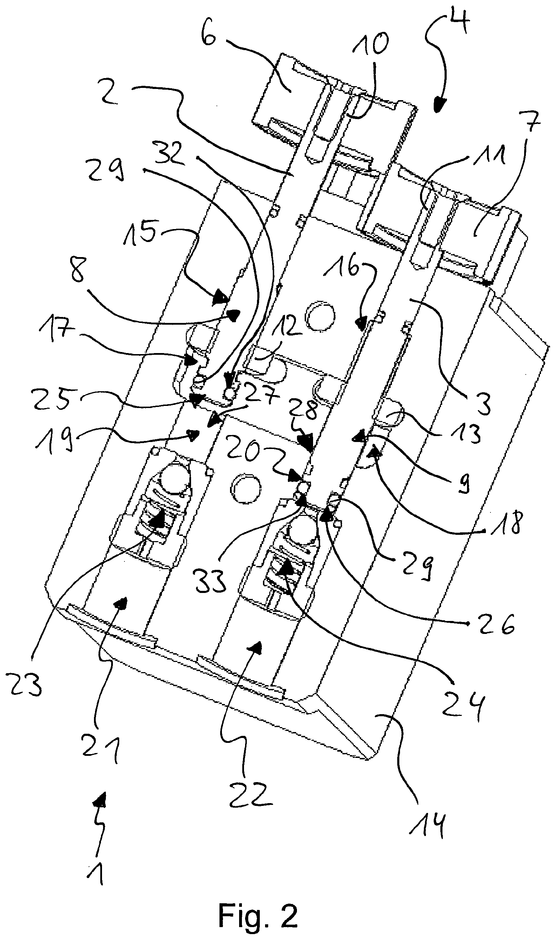

- Fig. 2: eine schematische Schnittdarstellung des ersten Ausführungsbei-spiels der Schmierpumpe aus der Fig. 1 mit dem in Ausgaberichtung betrachtet rechten Schraubkolben in zurückgezogener Stellung und damit ausgabebereit sowie mit dem in Ausgaberichtung betrachtet linken Schraubkolben in vorderster Stellung und damit ansaugbereit darstellt,

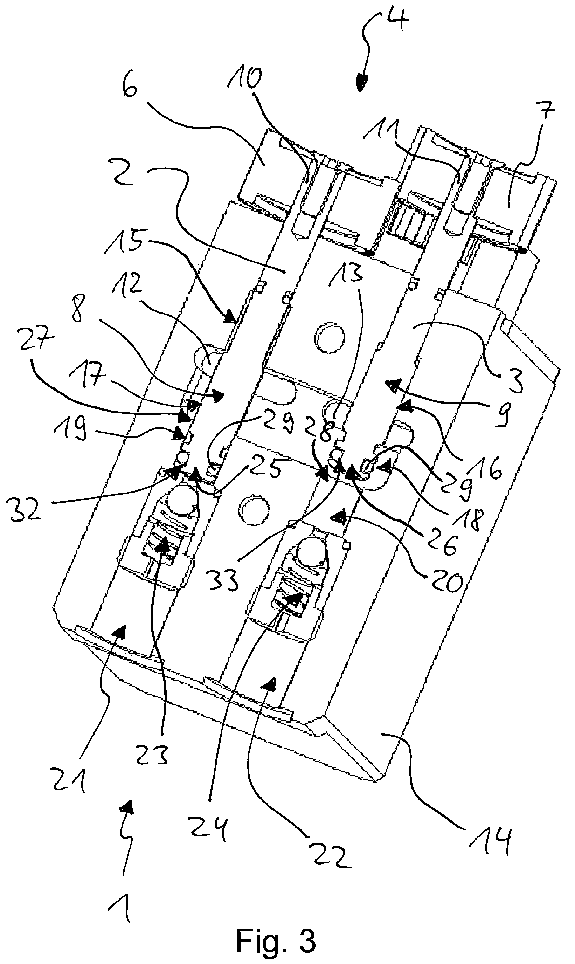

- Fig. 3: eine schematische Schnittdarstellung des ersten Ausführungsbei-spiels der Schmierpumpe aus den Fig. 1 und 2 mit dem in Ausgabe-richtung betrachtet rechten Schraubkolben in vorderster Stellung und damit ansaugbereit sowie mit dem in Ausgaberichtung betrachtet linken Schraubkolben in zurückgezogener Stellung und damit ausgabebereit verdeutlicht,

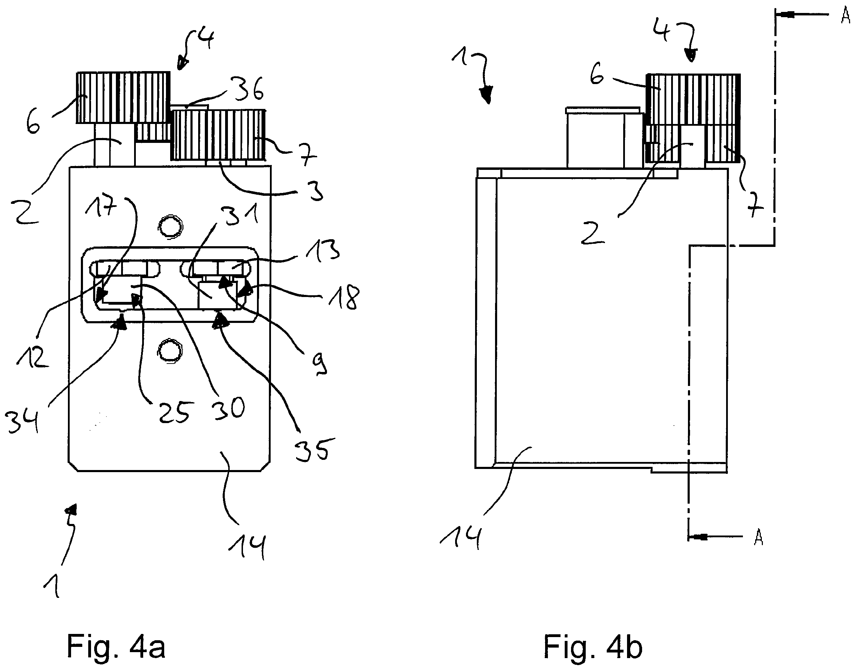

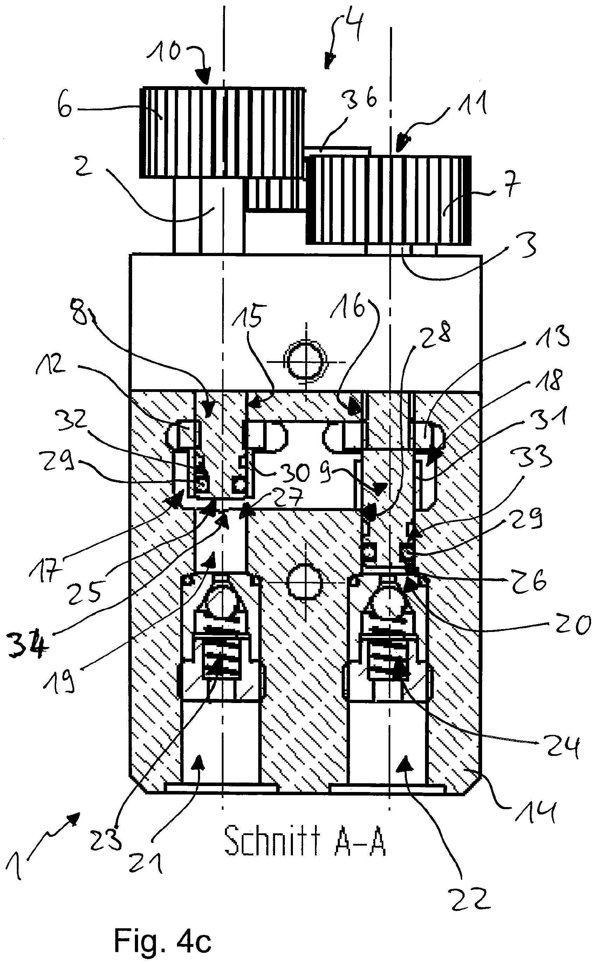

- Fig. 4a, 4b und 4c: entsprechend jeweils schematisch eine Draufsicht, eine Seitenansicht und eine teilweise geschnittene Ansicht eines zweiten Ausführungsbeispiels einer Schmierpumpe mit dem in Ausgaberichtung betrachtet rechten Schraubkolben in zurückgezogener Stellung und damit ausgabebereit sowie mit dem in Ausgaberichtung betrachtet linken Schraubkolben in vorderster Stellung und damit ansaugbereit darstellen,

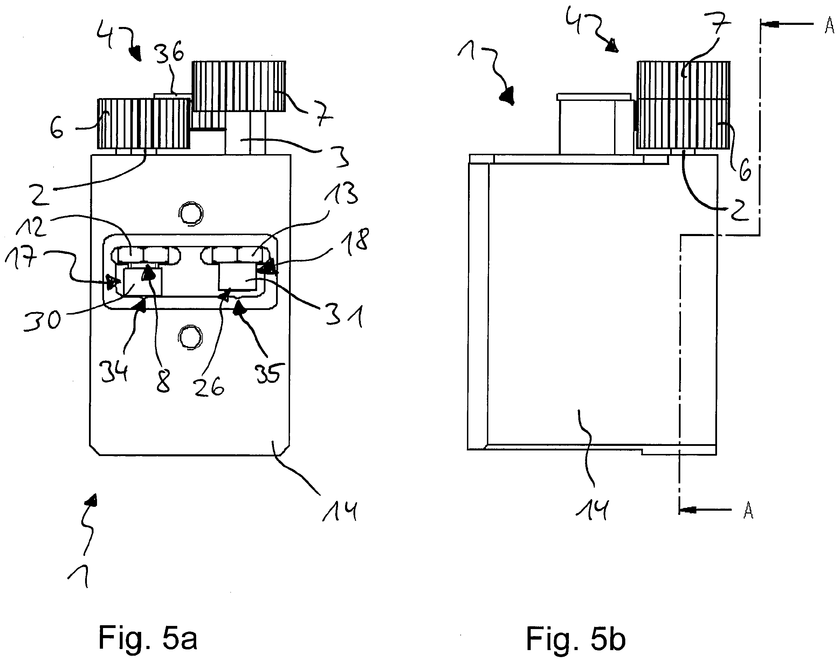

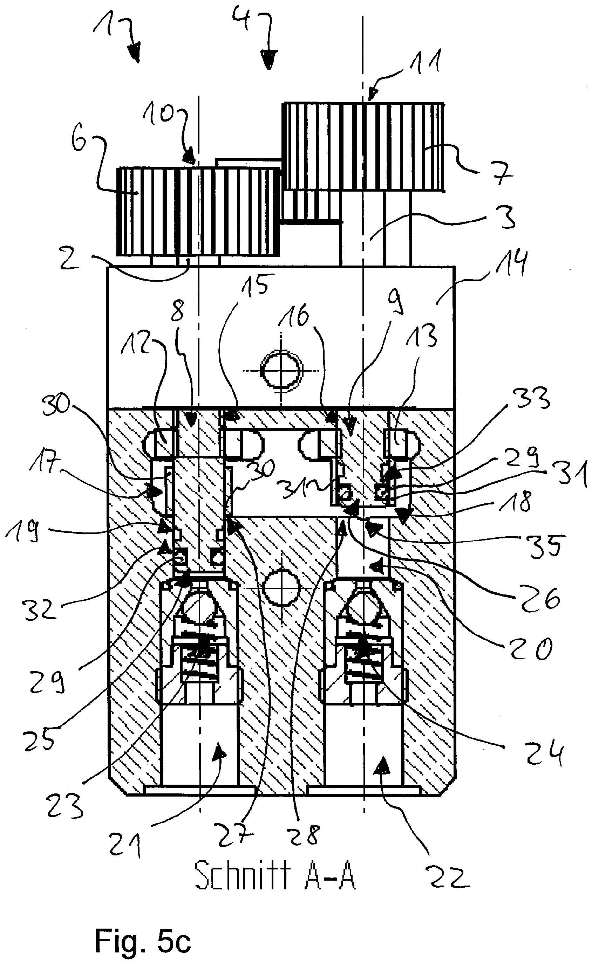

- Fig. 5a, 5b und 5c: entsprechend jeweils schematisch eine Draufsicht, eine Seitenansicht und eine teilweise geschnittene Ansicht des zweiten Ausführungsbeispiels der Schmierpumpe gemäß den Fig. 4a, 4b und 4c mit dem in Ausgaberichtung betrachtet linken Schraubkolben in zurückgezogener Stellung und damit ausgabebereit sowie mit dem in Ausgaberichtung betrachtet rechten Schraubkolben in vorderster Stellung und damit ansaugbereit verdeutlichen, und

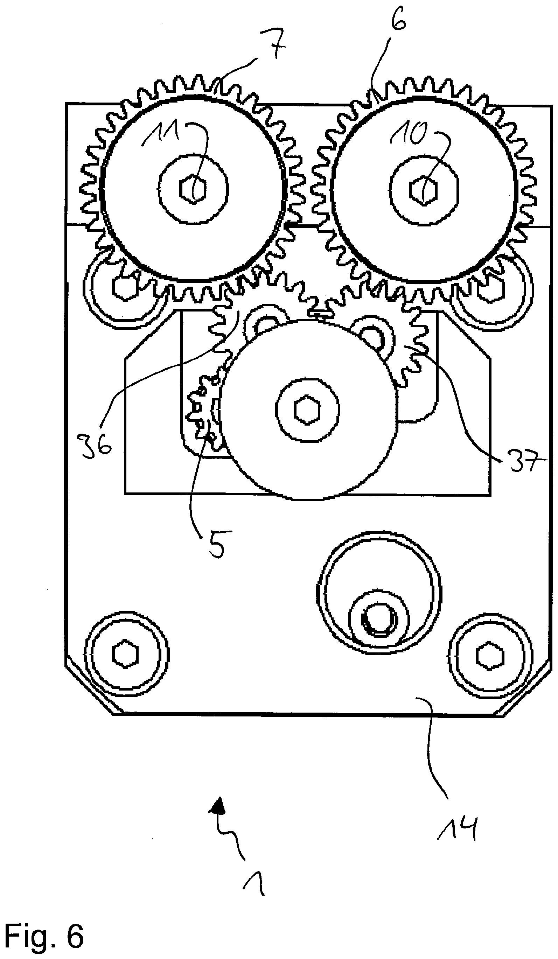

- Fig. 6: eine schematische Vorderansicht des zweiten Ausführungsbeispiels der Schmierpumpe gemäß den Fig. 4a, 4b, 4c, 5a, 5b und 5c zeigt.

Anhand der nachfolgend beschriebenen und in den Zeichnungen dargestellten Ausführungs- und Anwendungsbeispiele wird die Erfindung lediglich exemplarisch näher erläutert, d.h. sie ist nicht auf diese Ausführungs- und Anwendungsbeispiele oder auf die jeweiligen Merkmalskombinationen innerhalb einzelner Ausführungs- und Anwendungsbeispiele beschränkt. Verfahrens- und Vorrichtungsmerkmale ergeben sich jeweils analog auch aus Vorrichtungs- bzw. Verfahrensbeschreibungen.

Einzelne Merkmale, die im Zusammenhang mit konkreten Ausführungsbeispielen angeben und/oder dargestellt sind, sind nicht auf diese Ausführungsbeispiele oder die Kombination mit den übrigen Merkmalen dieser Ausführungsbeispiele beschränkt, sondern können im Rahmen des technisch Möglichen, mit jeglichen anderen Varianten, auch wenn sie in den vorliegenden Unterlagen nicht gesondert behandelt sind, und insbesondere Merkmalen und Ausgestaltungen anderer Ausführungsbeispiele kombiniert werden.

Gleiche Bezugszeichen in den einzelnen Figuren und Abbildungen der Zeichnungen bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

Vorrichtungs- und Verfahrensmerkmale ergeben sich auch jeweils aus bildlichen und schriftlichen Darstellungen von Verfahren bzw. Vorrichtungen.

Ferner ist die Bezugszeichenliste am Ende dieser Beschreibung explizit Bestandteil dieser Beschreibung.

In der Fig. 1 ist in einer schematischen perspektivischen Ansicht ein erstes Ausführungsbeispiel einer Schmierpumpe 1 zeigt. Die Fig. 2 verdeutlicht in einer schematischen Schnittdarstellung des ersten Ausführungsbeispiels der Schmierpumpe 1 aus der Fig. 1 mit dem in Ausgaberichtung betrachtet rechten Schraubkolben 2 in zurückgezogener Stellung und damit ausgabebereit sowie mit dem in Ausgaberichtung betrachtet linken Schraubkolben 3 in vorderster Stellung und damit ansaugbereit. Die schematische Schnittdarstellung des ersten Ausführungsbeispiels der Schmierpumpe 1 aus den Fig. 1 und 2 ist in der Fig. 3 mit dem in Ausgaberichtung betrachtet rechten Schraubkolben 2 in vorderster Stellung und damit ansaugbereit sowie mit dem in Ausgaberichtung betrachtet linken Schraubkolben 3 in zurückgezogener Stellung und damit ausgabebereit dargestellt. Aus dem Vergleich der Fig. 2 und 3 wird ohne weiteres deutlich, dass sich die beiden Schraubkolben 2 und 3 der Schmierpumpe 1 abwechselnd und gegenläufig im Druckbetrieb und im Saugbetrieb befinden.

Die grundsätzliche Betriebsweise wird durch ein Getriebe 4 realisiert, das für den gleichzeitigen Antrieb der beiden Schraubkolben 2 und 3 sorgt, so dass abwechselnd einer im Druckbetrieb und der andere im Saugbetrieb ist. Dazu enthält das Getriebe 4 beim ersten Ausführungsbeispiel ein Antriebsritzel 5, mit dem ein erstes, dem ersten Schraubkolben 3 zugeordnetes Kolbenzahnrad 7 kämmt, das wiederum mit einem zweiten Kolbenzahnrad 6 kämmt, das dem zweiten Schraubkolben 2 zugeordnet ist, so dass sich die beiden Schraubkolben 2 und 3 bei gleichsinnigem Schraubgewinde 8 bzw. 9 automatisch immer gegensinnig und bei gleicher Gewindesteigung der beiden Schraubgewinde 8 und 9 mit identischen Geschwindigkeiten drehen, so dass abwechselnd einer der Schraubkolben 2, 3 im Druckbetrieb und der andere im Saugbetrieb ist. Durch die Gestaltung der Schraubkolben 2 und 3 mit jeweils dem Schraubgewinde 8 bzw. 9 kann auch davon gesprochen werden, dass die Schraubkolben 2, 3 je eine Schraubspindel enthalten, die deshalb auch mit den Bezugszeichen 8 und 9 der Schraubgewinde gleichgesetzt werden

Um die Drehbewegung der Schraubkolben 2 und 3 durch den Antrieb des jeweils am freien Ende 10 bzw. 11 der Schraubkolben 2 und 3 koaxial befestigten entsprechenden Kolbenzahnrades 6, 7 in eine Axialbewegung der Schraubkolben 2 und 3 umzusetzen, ist jeweils das Schraubgewinde 8 bzw. 9 in eine Mutter 12 bzw. 13 geschraubt. Die beiden Muttern 12 und 13 sind nebeneinander in einem Gehäuse 14 der Schmierpumpe 1 ortsfest untergebracht und bestehen bei dem vorliegenden ersten Ausführungsbeispiel aus Messing.

In dem Gehäuse 14 liegen parallel zueinander dann Aufnahmekammern 15 und 16 für die beiden Schraubkolben 2 und 3 und enthalten verständlicherweise auch die beiden Muttern 12 und 13. Die Aufnahmekammern 15 und 16 enden einerseits in Durchgangsöffnungen (nicht bezeichnet) in dem Gehäuse 14, wo die die Kolbenzahnräder 6, 7 tragenden freien Enden 10 bzw. 11 der Schraubkolben 2 und 3 aus dem Gehäuse 14 austreten oder zumindest von außerhalb des Gehäuses 14 zugänglich sind, so dass die Kolbenzahnräder 6 und 7 an den freien Enden 10 bzw. 11 der Schraubkolben 2 und 3 drehfest und auch axial festgelegt befestigt werden können. Das Kolbenzahnrad 7 des in Ausgaberichtung für Schmiermittel (nicht dargestellt) aus der Schmierpumpe 1 linken Schraubkolbens 3 wird mit dem Antriebsritzel 5 des Getriebes 4 angetrieben. Die beiden Kolbenzahnräder 6 und 7 haben jeweils eine solche axiale Abmessung, dass sie über den gesamten axialen Verstellweg der Schraubkolben 2 und 3 miteinander in Eingriff bleiben und dass das Kolbenzahnrad 7 des in Ausgaberichtung für Schmiermittel (nicht dargestellt) aus der Schmierpumpe 1 linken Schraubkolbens 3 über den gesamten axialen Verstellweg des letzteren mit dem Antriebsritzel 5 in Eingriff bleibt.

Entgegengesetzt zu den freien Enden 10 bzw. 11 der Schraubkolben 2 und 3 münden die Aufnahmekammern 15 und 16 in Ansaugkammern 17 bzw. 18, in die durch Zuführeinrichtungen (nicht sichtbar) in ohne weiteres verständlicher Weise Schmiermittel (nicht dargestellt) in die Aufnahmekammern 15 und 16 gelangt, wenn der jeweilige Schraubkolben 2 bzw. 3 im Saugbetrieb ist. Gegenüber den Einmündungen der Aufnahmekammern 15 und 16 in die Ansaugkammem 17 bzw. 18 münden in letztere Ausgabekanäle 19 bzw. 20, in die Schmiermittel (nicht dargestellt) von dem jeweils im Druckbetrieb arbeitenden Schraubkolben 2 oder 3 gedrückt wird. Zwischen den Ausgabekanälen 19 und 20 und Schmiermittelauslässen 21 und 22 im Gehäuse 4 befindet sich jeweils ein Rückschlagventil 23 bzw. 24, das verhindert, dass Schmiermittel (nicht dargestellt) aus dem Schmiermittelauslass 21 und 22 im Gehäuse 4 zurück gesaugt wird, wenn der entsprechende Schraubkolben 2 oder 3 im Saugbetrieb ist. An die Schmiermittelauslässe 21 und 22 können getrennte Schmiermittelversorgungsleitungen (nicht dargestellt) zu separaten Schmierstellen (nicht dargestellt) angeschlossen sein, oder es können beide Schmiermittelauslässe 21 und 22 über ein T-Leitungsstück (nicht dargestellt), das allgemein bekannt ist, zusammengefasst sein, um gemeinsam eine Schmierstelle (nicht dargestellt) über eine an den einzelnen Ausgang des T-Leitungsstücks (nicht dargestellt) angeschlossene Schmiermittelversorgungsleitung (nicht dargestellt) zu versorgen. Statt getrennten Ansaugkammern 17 und 18 kann für die beiden Schraubkolben 2, 3 auch eine gemeinsame Ansaugkammer 17/18 verwendet werden.

Vorzugsweise sind die Abmessungen der Ansaugkammern 17 und 18 vor allem in Axialrichtung der Schraubkolben 2 bzw. 3 auf deren Axialverschiebung und deren maximal aus dem Gehäuse 4 ausgefahrenen Endstellungen so abgestimmt, dass die zu den freien Enden 10 bzw. 11 der Schraubkolben 2 und 3 mit den Kolbenzahnrädern 6 und 7 entgegengesetzt liegenden Arbeitsenden 25 und 26 die Einmündungen 27 und 28 der Ausgabekanäle 19 bzw. 20 in die in Ansaugkammern 17 bzw. 18 vollständig frei geben, wenn der jeweilige Schraubkolben 2 bzw. 3 in seiner vollständig zurück gezogenen Stellung, d.h. maximal aus dem Gehäuse 4 ausgefahrenen Stellung ist. Dadurch wird ein gegenüber anderen Bauarten wesentlich besseres Ansaugverhalten der Schmierpumpe 1 erreicht. Um die Effizienz der Schraubkolben 2, 3 beim Ausdrücken von Schmiermittel (nicht dargestellt) aus den Ansaugkammern 17 und 18 in die Ausgabekanälen 19 bzw. 20 weiter durch die Rückschlagventile 23 bzw. 24 in die Schmiermittelauslässe 21 und 22 im Gehäuse 4 weiter zu erhöhen, sind die Arbeitsenden 25 und 26 mit elastischen Dichtungen 29, wie vorzugsweise O-Ringen, versehen, um in ihrem jeweiligen Ausgabekanal 19 bzw. 20 abgedichtet zu sein.

Zum Antrieb der Schmierpumpe 1 enthält diese einen im Gehäuse 4 mit untergebrachten Motor (nicht sichtbar), wie insbesondere ein Gleichstrom-Elektromotor. Damit auf einfache Weise die Drehrichtungsumkehr der beiden Schraubkolben 2 und 3 ermöglicht wird, ist ferner eine entsprechende Steuerung (nicht sichtbar) vorgesehen und vorteilhafterweise auch in dem Gehäuse 4 untergebracht. Die Drehrichtungsumkehrsteuerung kann beispielsweise so ausgelegt sein, dass sie nach einer vorgegebenen Anzahl von Umdrehungen der Motorwelle die Drehrichtung umkehrt, oder dass wenigstens zwei Endstellungen der beiden Schraubkolben 2 und 3 über eine Sensorik erfasst werden, mittels der das Erreichen wenigstens zweier Endstellungen der insgesamt vier Endstellungen der beiden Schraubkolben 2 und 3 detektierbar ist oder detektiert wird, um entsprechend durch die Drehrichtungsumkehrsteuerung des Motors letzteren zur Drehrichtungsumkehr zu steuern, wenn ein Schraubkolben 2, 3 eine Endstellung erreicht. Die Sensorik kann beispielsweise zwei einfache Schalter enthalten, wie jeder Fachmann mit der in so weit geschaffenen Anleitung ohne weiteres versteht und umsetzen kann.

Verfahrensmäßig wird bei dem Schmiermittelversorgungsverfahren der erste Schraubkolben 3 in einem Saugbetrieb betrieben, während der zweite Schraubkolben 2 in einem Druckbetrieb ist und umgekehrt, und werden die beiden Schraubkolben 2 und 3 über das gemeinsame Getriebe 4 angetrieben, das für jeden Schraubkolben 2, 3 das entsprechend zugeordnete und daran drehmäßig und axial festgelegte Kolbenzahnrad 6 bzw. 7 enthält, welche Kolbenzahnräder 6, 7 miteinander kämmen und sich dadurch gegensinnig drehen.

Ein zweites Ausführungsbeispiel einer Schmierpumpe 1 ist in den Fig. 4a, 4b, 4c, 5a, 5b, 5c und 6 in verschiedenen Ansichten und Betriebszuständen gezeigt. In den Fig. 4a, 4b und 4c ist entsprechend jeweils schematisch eine Draufsicht, eine Seitenansicht und eine teilweise geschnittene Ansicht des zweiten Ausführungsbeispiels der Schmierpumpe 1 mit dem in Ausgaberichtung betrachtet rechten Schraubkolben 2 in zurückgezogener Stellung und damit ausgabebereit sowie mit dem in Ausgaberichtung betrachtet linken Schraubkolben 3 in vorderster Stellung und damit ansaugbereit dargestellt. Die Fig. 5a, 5b und 5c verdeutlichen entsprechend jeweils schematisch in einer Draufsicht, einer Seitenansicht und einer teilweise geschnittenen Ansicht das zweite Ausführungsbeispiel der Schmierpumpe 1 mit dem in Ausgaberichtung betrachtet linken Schraubkolben 3 in zurückgezogener Stellung und damit ausgabebereit sowie mit dem in Ausgaberichtung betrachtet rechten Schraubkolben 2 in vorderster Stellung und damit ansaugbereit. Die Fig. 6 zeigt in einer schematischen Vorderansicht das zweite Ausführungsbeispiel der Schmierpumpe 1 mit weiteren Details. Soweit die Ausgestaltung, die Merkmale und der Betrieb des zweiten Ausführungsbeispiels der Schmierpumpe 1 identisch sind oder direkt entsprechen jeweils der Ausgestaltung, den Merkmalen und dem Betrieb des ersten Ausführungsbeispiels der Schmierpumpe 1 gemäß den Fig. 1, 2 und 3, ist dies durch identische Bezugszeichen kenntlich gemacht, und eine gesonderte Erläuterung und Beschreibung dieser Ausgestaltung und Merkmale sowie des Betriebs ist entbehrlich, indem diesbezüglich hier vollumfänglich auf die Angaben zu dem ersten Ausführungsbeispiel Bezug genommen wird.

Über das erste Ausführungsbeispiel gemäß den Fig. 1, 2 und 3 hinaus enthält die Schmierpumpe 1 des zweiten Ausführungsbeispiels gemäß den Fig. 4a, 4b, 4c, 5a, 5b, 5c und 6 eine Hülse 30 für den in Ausgaberichtung betrachtet rechten Schraubkolben 2 und eine Hülse 31 für den in Ausgaberichtung betrachtet linken Schraubkolben 3. Die Hülsen 30, 31 sind etwas kürzer als die Abmessung der Ansaugkammern 17, 18 in Längsrichtung der Schraubkolben 2, 3 minus die Dicke der Muttern 12, 13 in dieser Richtung, oder in anderen Worten sind die Hülsen 30, 31 etwas kürzer als der Abstand zwischen den Einmündungen oder Eintrittsöffnungen 27, 28 der Ausgabekanäle 19, 20 für die Schraubkolben 2, 3 und den Muttern 12, 13. Der Innendurchmesser der Hülsen 30, 31 ist zumindest im Wesentlichen gleich dem Innendurchmesser der Ausgabekanäle 19, 20, in die die Schraubkolben 2, 3 jeweils beim Druckbetrieb zur Ausgabe von Schmiermittel aus den Ansaugkammern 17, 18 drehend eingefädelt werden. Die Hülsen 30, 31 umgeben den jeweiligen Schraubkolben 2, 3 und dienen dazu, um die elastischen Dichtungen 29, die insbesondere durch O-Ringe gebildet sind, im Bereich der Arbeitsenden 25, 26 der Schraubkolben 2, 3 vorzuspannen, so dass diese elastischen Dichtungen 29 im Druckbetrieb oder Schmiermittelausgabebetrieb eines jeden Schraubkolbens 2, 3 entsprechend in diesem "vorgespannten" Zustand in die Eintrittsöffnungen oder Einlässe 27, 28 der Ausgabekanäle 19, 20 für die Schraubkolben 2, 3 eintreten. Dadurch werden die elastischen Dichtungen 29, wie insbesondere O-Ringe, beim Eintritt in die Eintrittsöffnungen oder Einmündungen 27, 28 der Ausgabekanäle 19, 20 für die Schraubkolben 2, 3 vor Abscherung geschützt. Für die Aufnahme und Lagefixierung der elastischen Dichtungen 29, wie insbesondere O-Ringe, an den Schraubkolben 2, 3 enthalten letztere je eine passend z.B. zu O-Ringen ringförmige Aufnahmenut 32, 33.

Im Betrieb wird die Hülse 30, 31 im Saugbetrieb oder bei Bewegung des jeweiligen Schraubkolbens 2, 3 in Saugrichtung mit diesem Schraubkolben 2, 3 mit bewegt, sobald die entsprechende elastische Dichtung 29 aus dem zugehörigen Ausgabekanal 19, 20 austritt. In Abhängigkeit von der axialen Länge der Hülse 30, 31 kommt diese dann in Anlage an der jeweiligen Mutter 12, 13, bevor der entsprechende Schraubkolben 2, 3 seine Bewegung in Saugrichtung beendet und seinen Bewegungs- oder Bewegungsrichtungsumkehrpunkt zur anschließenden Bewegung in Druckrichtung, d.h. für den Druckbetrieb, hat. Wenn die Hülse 30, 31 an der jeweiligen Mutter 12, 13 anliegt oder ansteht und dadurch in Axialrichtung blockiert oder gehalten wird, und sich der entsprechende Schraubkolben 2, 3 in Saugrichtung weiter bewegt, wird zwangsweise die zugehörige elastische Dichtung 29, wie insbesondere der entsprechende O-Ring, weiter in die Hülse 30, 31 hinein gezogen, wie dies in der Fig. 4c beim linken Schraubkolben 2 und in der Fig. 5c beim rechten Schraubkolben 3 zu erkennen ist.

Nach der Bewegungsrichtungsumkehr des Schraubkolbens 2, 3, also bei Bewegung in Druck- oder Ausgaberichtung und somit im Druckbetrieb bleibt die jeweilige Hülse 30, 31 durch die Klemmung der elastischen Dichtung 29, wie insbesondere des entsprechenden O-Rings, in seiner axialen Stellung an dem entsprechenden Schraubkolben 2, 3 festgehalten und bewegt sich mit diesem Schraubkolben 2, 3 in Druckrichtung mit, bis die Hülse 30, 31 an der Eintrittsöffnung oder Einmündung 27, 28 des jeweiligen Ausgabekanals 19, 20 für den Schraubkolben 2, 3 anstößt oder zur Anlage kommt. Dann bewegt sich der entsprechende Schraubkolben 2, 3 ohne weitere Mitnahme der Hülse 30, 31 in Axialrichtung im Druckbetrieb weiter, und dabei wird die elastische Dichtung 29, d.h. beim vorliegenden zweiten Ausführungsbeispiel der entsprechende O-Ring aus seiner Hülse 30, 31 heraus durch die jeweilige Einmündung oder Eintrittsöffnung 27, 28 in den entsprechenden Ausgabekanal 19, 20 geschoben. Da die elastische Dichtung 29 bzw. der O-Ring in der Hülse 30, 31 vorgespannt ist, kann beim Durchgang durch die jeweilige Eintrittsöffnung oder Einmündung 27, 28 kein Abscheren der elastischen Dichtung 29 bzw. des jeweiligen O-Rings auftreten.

Die Hülsen 30, 31 sind besonders vorteilhaft bei Drücken > 20 bar und sorgen dann zuverlässig dafür, dass ein Abscheren der elastischen Dichtung 29 bzw. des jeweiligen O-Rings vermieden wird. Durch die Hülsen 30, 31 wird somit in besonders vorteilhafter Weise verschleißbedingter Aufwand zum Betrieb der Schmierpumpe 1 minimiert.

Als weitere Änderung beim zweiten Ausführungsbeispiel gemäß den Fig. 4a, 4b, 4c, 5a, 5b, 5c und 6 über das erste Ausführungsbeispiel gemäß den Fig. 1, 2 und 3 hinaus enthalten die Ausgabekanäle 19, 20 für die Schraubkolben 2, 3 an ihren Eintrittsöffnungen oder Einlässen 27,28 je eine Entlastungsnut 34, 35, wie in der Fig. 4c am Einlass 27 des Ausgabekanals 19 und in der Fig. 5c am Einlass 28 des Ausgabekanals 20 zu erkennen ist. Es wurde bei Versuchen festgestellt, dass eine ganz kleine Nut am Einlass einen positiven Effekt beim Einfädeln des Schraubkolbens im Druckbetrieb oder in Druckrichtung in den Ausgabekanal bringt. Der Druck baut sich nicht gleich schlagartig auf, wenn der O-Ring oder allgemein die elastische Dichtung noch vollständig draußen, d.h. in der oder in der jeweiligen Ansaugkammer ist, sondern der Druck kann erst einmal über diese kleine Entlastungsnut entweichen. Damit muss nur noch ein ganz kleiner Teil des O-Rings oder allgemein der elastischen Dichtung unter vollem Druck drehend einfädeln. Somit tragen die Entlastungsnute 34, 35 ebenfalls vorteilhaft zu einem dauerhaft möglichst unaufwendigen Betrieb der der Schmierpumpe 1 bei.

Wie ferner der Vergleich der Fig. 1 und 6 zeigt, sind beim zweiten Ausführungsbeispiel gemäß den Fig. 4a, 4b, 4c, 5a, 5b, 5c und 6 gegenüber dem ersten Ausführungsbeispiel gemäß den Fig. 1, 2 und 3 zwischen dem Antriebsritzel 5 und den Kolbenzahnrädern 6, 7 zwei Zwischenzahnräder 36, 37 zwischengeschaltet und sind die beiden Kolbenzahnräder 6, 7 nicht direkt miteinander in Eingriff. Bei dem zweiten Ausführungsbeispiel kämmt das erste Zwischenzahnrad 36 mit dem einen Kolbenzahnrad 7 und mit dem zweiten Zwischenzahnrad 37, das mit dem anderen Kolbenzahnrad 6 in Eingriff ist, so dass sich die beiden Kolbenzahnräder 6, 7 gegensinnig drehen. Damit wird als weiterer Vorteil bei der Schmierpumpe 1 nach dem zweiten Ausführungsbeispiel gegenüber dem ersten Ausführungsbeispiel ein besserer Wirkungsgrades erreicht, indem durch die zwei Zwischenzahnräder 36, 37 ein Anstieg der Genauigkeit realisiert wird. Bei der Schmierpumpe 1 nach dem ersten Ausführungsbeispiel sind zwei fliegende Lagerungen der drehenden Schraubkolben 2, 3 enthalten und werden einerseits direkt antriebsseitig belastet (Eingriff Antriebsritzel 5 zum Kolbenzahnrad 7 und Schraubkolben 3) und gleichzeitig abtriebsseitig belastet (Eingriff Kolbenzahnrad 7 mit Schraubkolben 3 und Kolbenzahnrad 6 mit Schraubkolben 2) sowie andererseits nur antriebsseitig belastet (Eingriff Kolbenzahnrad 6 mit Schraubkolben 2 und Kolbenzahnrad 7 mit Schraubkolben 3). Durch die Anordnung und Konstruktion beim zweiten Ausführungsbeispiel wird gegenüber der Ausführung des ersten Ausführungsbeispiels die doppelte Genauigkeit erzielt, da die Zwischenzahnräder 36, 37 exakt laufen und die Belastungen der Kolbenzahnräder 6, 7 gleich sind.

Die Erfindung ist anhand der Ausführungsbeispiele in der Beschreibung und in der Zeichnung lediglich exemplarisch dargestellt und nicht darauf beschränkt, sondern umfasst alle Variationen, Modifikationen, Substitutionen und Kombinationen, die der Fachmann den vorliegenden Unterlagen insbesondere im Rahmen der Ansprüche und der allgemeinen Darstellungen in der Einleitung dieser Beschreibung sowie der Beschreibung der Ausführungsbeispiele und deren Darstellungen in der Zeichnung entnehmen und mit seinem fachmännischen Wissen sowie dem Stand der Technik, insbesondere den Offenbarungsgehalten der eingangs angegebenen eigenen Vorveröffentlichungen kombinieren kann. Insbesondere sind alle einzelnen Merkmale und Ausgestaltungsmöglichkeiten der Erfindung und ihrer Ausführungsvarianten kombinierbar.

### Bezeichnungen

- 1: Schmierpumpe
- 2, 3: Schraubkolben
- 4: Getriebe
- 5: Antriebsritzel
- 6,7: Kolbenzahnrad
- 8, 9: Schraubspindel, Schraubgewinde
- 10,11: freies Ende
- 12,13: Mutter
- 14: Gehäuse
- 15, 16: Aufnahmekammer
- 17,18: Ansaugkammer
- 19,20: Ausgabekanal
- 21,22: Schmiermittelauslass
- 23,24: Rückschlagventil
- 25,26: Arbeitsenden
- 27, 28: Einmündung, Eintrittsöffnung, Einlass
- 29: elastische Dichtungen
- 30,31: Hülse
- 32,33: Aufnahmenut
- 34,35: Entlastungsnut
- 36,37: Zwischenzahnrad

## Patentansprüche

1. Schmierpumpe (1),
**dadurch gekennzeichnet,**
**dass** Schraubkolben (2, 3) enthalten sind, von denen abwechselnd einer im Druckbetrieb und der andere im Saugbetrieb ist.

2. Schmierpumpe (1) nach Anspruch 1,
**dadurch gekennzeichnet,**
**dass** jeder Schraubkolben (2, 3) eine Schraubspindel mit einem Schraubgewinde (8, 9) enthält, die **in** einer im Gehäuse (4) der Schmierpumpe (1) ortsfesten Mutter (12, 13) geführt ist, die insbesondere eine Messingmutter ist.

3. Schmierpumpe (1) nach Anspruch 1 oder 2,
**dadurch gekennzeichnet,**
**dass** ein Getriebe (4) für den gleichzeitigen Antrieb der beiden Schraubkolben (2, 3) enthalten ist, so dass abwechselnd einer im Druckbetrieb und der andere im Saugbetrieb ist.

4. Schmierpumpe (1) nach den Ansprüchen 2 und 3,
**dadurch gekennzeichnet,**
**dass** das Getriebe (4) ein Antriebsritzel (5) enthält, mit dem ein erstes, dem ersten Schraubkolben (3) zugeordnetes Kolbenzahnrad (7) angetrieben wird, das mit einem zweiten Kolbenzahnrad (6) kämmt, das dem zweiten Schraubkolben (2) zugeordnet ist, so dass sich die beiden Schraubkolben (2, 3) bei gleichsinnigen Schraubgewinden der Schraubspindeln (8, 9) automatisch immer gegensinnig und vorzugsweise mit identischen Geschwindigkeiten drehen, so dass abwechselnd ein Schraubkolben (2, 3) im Druckbetrieb und der andere Schraubkolben (3, 2) im Saugbetrieb ist.

5. Schmierpumpe (1) nach den Ansprüchen 2 und 3,
**dadurch gekennzeichnet,**
**dass** das Getriebe (4) ein Antriebsritzel (5) **enthält,** mit dem ein erstes Zwischenzahnrad (36) kämmt, das wiederum mit einem ersten, dem ersten Schraubkolben (3) zugeordneten kolbenzahnrad (7) und einem zweiten Zwischenzahnrad (37) kämmt, das wiederum mit einem zweiten Kolbenzahnrad (6) kämmt, das dem zweiten Schraubkolben (2) zugeordnet ist, so dass sich die beiden Schraubkolben (2, 3) bei gleichsinnigen Schraubgewinden der Schraubspindeln (8, 9) automatisch immer gegensinnig und vorzugsweise mit identischen Geschwindigkeiten drehen, so dass abwechselnd ein Schraubkolben (2, 3) im Druckbetrieb und der andere Schraubkolben (3, 2) im Saugbetrieb ist.

6. Schmierpumpe (1) nach Anspruch 4 oder 5,
**dadurch gekennzeichnet,**
**dass** das Antriebsritzel (5) und die Kolbenzahnräder (6, 7) oder ggf. die Zwischenzahnräder (36, 37) und die Kolbenzahnräder (6, 7) eine derartige Kombination an axialen Längen haben, dass sie in jeder axialen Endstellung der Schraubspindeln (8, 9) in ihren zugehörigen Muttern (12, 13) in Eingriff sind.

7. Schmierpumpe (1) nach einem der vorhergehenden Ansprüche,
**dadurch gekennzeichnet,**
**dass** die Schraubkolben (2, 3) in ihren Kolbenendbereichen (Arbeitsenden **25 und 26**) mit insbesondere elastischen Dichtungen (29), wie vorzugsweise O-Ringen, versehen sind, um in ihrem jeweiligen Ausgabekanal (**19, 20**) abgedichtet zu sein.

8. Schmierpumpe (1) nach Anspruch 7,
**dadurch gekennzeichnet,**
**dass** für jede elastische Dichtung (29), wie vorzugsweise für jeden O-Ring, eine die elastische Dichtung (29) am Schraubkolben (2, 3) umgebende Hülse (30, 31) vorgesehen und so am Schraubkolben (2, 3) angeordnet ist, dass sich die elastische Dichtung (29), wenn sie bedingt durch die axiale Stellung des entsprechenden Schraubkolbens (2, 3) außerhalb des jeweiligen Ausgabekanals (**19, 20**) ist, jedenfalls dann innerhalb der entsprechenden Hülse (30, 31) befindet, wenn die Einführung der elastischen Dichtung (29) in den jeweiligen Ausgabekanal (**19, 20**) bevorsteht, und dass jede Hülse (30, 31) einen Innendurchmesser hat, der zumindest im Wesentlichen gleich dem Innendurchmesser des zugehörigen Ausgabekanals (**19, 20**) ist.

9. Schmierpumpe (1) nach einem der vorhergehenden Ansprüche,
**dadurch gekennzeichnet,**
**dass** für jeden Schraubkolben (2, 3) ein Ausgabekanal **(19, 20**) vorgesehen ist, dessen Schmiermittelauslass **(****21**, **22**) mit einem Rückschlagventil (**23, 24**) versehen ist, um einen Rückfluss von Schmiermittel in den Ausgabekanal (**19, 20**) beim Saugbetrieb des zugehörigen Schraubkolbens (2, 3) zu verhindern.

10. Schmierpumpe (1) nach einem der vorhergehenden Ansprüche,
**dadurch gekennzeichnet,**
**dass** für jeden Schraubkolben (2, 3) ein Ausgabekanal **(19, 20**) vorgesehen ist, dessen Eintrittsöffnung (27, 28) zur jeweiligen oder für beide Schraubkolben (2, 3) gemeinsamen Ansaugkammer (17, 18) hin mit einer Entlastungsnut (34, 35) versehen ist.

11. Schmierpumpe (1) nach einem der vorhergehenden Ansprüche,
**dadurch gekennzeichnet,**
**dass** ein Motor, wie insbesondere ein Gleichstrom-Elektromotor vorgesehen ist, der enthält oder dem zugeordnet ist eine Drehrichtungsumkehrsteuerung, der insbesondere eine Sensorik zugeordnet ist, mittels der das Erreichen wenigstens zweier Endstellungen der insgesamt vier Endstellungen der beiden Schraubkolben (2, 3) detektierbar ist oder detektiert wird, um entsprechend durch die Drehrichtungsumkehrsteuerung des Motors letzteren zur Drehrichtungsumkehr zu steuern, wenn ein Schraubkolben (2, 3) eine Endstellung erreicht.

12. Schmiermittelversorgungsverfahren, wobei ein erster Schraubkolben (3) in einem Saugbetrieb ist, während ein zweiter Schraubkolben (2) in einem Druckbetrieb ist und umgekehrt, und wobei die beiden Schraubkolben (2, 3) über ein gemeinsames Getriebe (4) angetrieben werden, das für jeden Schraubkolben (2, 3) ein Kolbenzahnrad (6, 7) enthält.

13. Schmiermittelversorgungsverfahren nach Anspruch 12,
**dadurch gekennzeichnet,**
**dass** die Kolbenzahnräder (6, 7) miteinander kämmen und sich dadurch gegensinnig drehen, oder
**dass** das Getriebe (4) den Kolbenzahnrädern (6, 7) vorgeschaltete Zwischenzahnräder (36, 37) enthält, die so konfiguriert sind, dass sich die Kolbenzahnrädern (6, 7) dadurch gegensinnig drehen.

14. Schmiermittelversorgungsverfahren nach Anspruch 12 oder 13,
**dadurch gekennzeichnet,**
**dass** die Schraubkolben (2, 3) in ihren Kolbenendbereichen (Arbeitsenden **25 und 26**) mit insbesondere elastischen Dichtungen (29), wie vorzugsweise O-Ringen, versehen sind, um in ihrem jeweiligen Ausgabekanal (**19, 20**) abgedichtet zu sein, und dass die Dichtungen (29) jedenfalls vor ihrem Eintritt in ihren jeweiligen Ausgabekanal **(19, 20**) jeweils innerhalb einer den entsprechenden Schraubkolben (2, 3) umgebenden Hülse (30, 31) vorgespannt sind.

15. Schmiermittelversorgungsverfahren nach einem der Ansprüche 12 bis 14,
**dadurch gekennzeichnet,**
**dass** beim Eintritt eines Schraubkolben (2, 3) in seinen Ausgabekanal (**19, 20**) im Druckbetrieb über eine Entlastungsnut (34, 35) am Rand der Einmündung (27, 28) des Ausgabekanals (**19, 20**) zur jeweiligen oder für beide Schraubkolben (2, 3) gemeinsamen Ansaugkammer (17, 18) hin eine Druckentlastung erfolgt.

## Claims

1. Lubricating pump (1),
**characterised in that**
it comprises screw-type pistons (2, 3) of which alternately one is in compression operation and the other is in suction operation.

2. Lubricating pump (1) according to claim 1,
**characterised in that**
each screw-type piston (2, 3) comprises a screw spindle with a screw thread (8, 9), which is guided in a nut (12, 13) which is positionally fixed in the housing (4) of the lubricating pump (1) and which is in particular a brass nut.

3. Lubricating pump (1) according to claim 1 or claim 2,
**characterised in that**
it comprises gearing (4) for driving the two screw-type pistons (2, 3) simultaneously, such that alternately one is in compression operation and the other is in suction operation.

4. Lubricating pump (1) according to claims 2 and 3,
**characterised in that**
the gearing (4) comprises a drive pinion (5) which drives a first piston gearwheel (7) which is assigned to the first screw-type piston (3) and meshes with a second piston gearwheel (6) which is assigned to the second screw-type piston (2), such that the two screw-type pistons (2, 3) with equidirectional screw threads on the screw spindles (8, 9) always automatically rotate in opposing directions and preferably at identical speeds, such that alternately one screw-type piston (2, 3) is in compression operation and the other screw-type piston (3, 2) is in suction operation.

5. Lubricating pump (1) according to claims 2 and 3,
**characterised in that**
the gearing (4) comprises a drive pinion (5), which meshes with a first intermediate gearwheel (36), which in turn meshes with a first piston gearwheel (7) assigned to the first screw-type piston (3) and a second intermediate gearwheel (37) which in turn meshes with a second piston gearwheel (6) which is assigned to the second screw-type piston (2), such that the two screw-type pistons (2, 3) in the case of equidirectional screw threads on the screw spindles (8, 9) automatically always rotate in opposing directions and preferably at identical speeds, such that alternately one screw-type piston (2, 3) is in compression operation and the other screw-type piston (3, 2) is in suction operation.

6. Lubricating pump (1) according to claim 4 or claim 5,
**characterised in that**
the drive pinion (5) and the piston gearwheels (6, 7) or, where appropriate, the intermediate gearwheels (36, 37) and the piston gearwheels (6, 7), have a combination of axial lengths such that they are in engagement with their assigned nuts (12, 13) in every axial end position of the screw spindles (8, 9).

7. Lubricating pump (1) according to any one of the preceding claims,
**characterised in that**
the screw-type pistons (2, 3) in their piston end regions (working ends 25 and 26) are provided with in particular elastic seals (29), such as preferably O rings, in order to be sealed in their respective discharge duct (19, 20).

8. Lubricating pump (1) according to claim 7,
**characterised in that**
for each elastic seal (29), such as preferably for each O ring, a sleeve (30, 31) is provided surrounding the elastic seal (29) on the screw-type piston (2, 3) and arranged on the screw-type piston (2, 3) such that the elastic seal (29), when situated outside the respective discharge duct (19, 20) owing to of the axial position of the corresponding screw-type piston (2, 3), is at any rate then located inside the corresponding sleeve (30, 31), when the introduction of the elastic seal (29) into the respective discharge duct (19, 20) is imminent, and **in that** each sleeve (30, 31) has an internal diameter which is at least substantially identical to the internal diameter of the associated discharge duct (19, 20).

9. Lubricating pump (1) according to any one of the preceding claims,
**characterised in that**
for each screw-type piston (2, 3) a discharge duct (19, 20) is provided whose lubricant outlet (21, 22) is provided with a check valve (23, 24) in order to prevent a return flow of lubricant into the discharge duct (19, 20) when the associated screw-type piston (2, 3) is in suction operation.

10. Lubricating pump (1) according to any one of the preceding claims,
**characterised in that**
for each screw-type piston (2, 3) a discharge duct (19, 20) is provided whose inlet orifice (27, 28) is provided with a relief groove (34, 35) for the respective suction chamber (17, 18) or for the suction chamber (17, 18) common to both screw-type pistons (2, 3).

11. Lubricating pump (1) according to any one of the preceding claims,
**characterised in that**
a motor, such as in particular a direct-current electric motor, is provided which comprises, or is assigned, a rotational direction reversal controller, to which in particular a sensor arrangement is assigned by means of which the attainment of at least two end positions of the total of four end positions of the two screw-type pistons (2, 3) can be or is detected, in order by means of the rotational direction reversal controller of the motor to control the latter correspondingly in order to achieve the reversal of the direction of rotation when a screw-type piston (2, 3) reaches an end position.

12. Method for supplying lubricant wherein a first screw-type piston (3) is in suction operation, whilst a second screw-type piston (2) is in compression operation, and vice versa, and wherein the two screw-type pistons (2, 3) are driven by means of a common gearing (4) which comprises one piston gearwheel (6, 7) for each screw-type piston (2, 3).

13. Method for supplying lubricant according to claim 12,
**characterised in that**
the piston gearwheels (6, 7) mesh with one another and thereby rotate in opposing directions, or **in that** the gearing (4) comprises intermediate gearwheels (36, 37) upstream of the piston gearwheels (6, 7), said intermediate gearwheels (36, 37) being configured such that the piston gearwheels (6, 7) rotate in opposing directions.

14. Method for supplying lubricant according to claim 12 or 13,
**characterised in that**
the screw-type pistons (2, 3) in their piston end regions (working ends 25 and 26) are provided with in particular elastic seals (29), such as preferably O rings, in order for them to be sealed in their respective discharge duct (19, 20), and **in that** at any event before entering their respective discharge duct (19, 20) the seals (29) are in each case pre-tensioned within a sleeve (30, 31) which surrounds the corresponding screw-type piston (2, 3).

15. Method for supplying lubricant according to any one of claims 12 to 14,
**characterised in that**
on the entry of a screw-type piston (2, 3) into its discharge duct (19, 20) in compression operation a release of pressure into the respective suction chamber (17, 18) or the suction chamber (17, 18) common to both screw-type pistons (2, 3) takes place via a relief groove (34, 35) at the edge of the inlet (27, 28) of the discharge duct (19, 20).

## Revendications

1. Pompe de lubrification (1),
**caractérisée en ce**
**que** des pistons filetés (2, 3) sont compris, dont, en alternance, un fonctionne en régime sous pression et l'autre fonctionne en régime d'aspiration.

2. Pompe de lubrification (1) selon la revendication 1,
**caractérisée en ce**
**que** chaque piston fileté (2, 3) comprend une broche filetée ayant un pas de vis (8, 9), laquelle est guidée dans un écrou (12, 13) stationnaire dans le carter (4) de la pompe de lubrification (1), lequel écrou est notamment un écrou en laiton.

3. Pompe de lubrification (1) selon la revendication 1 ou 2,
**caractérisée en ce**
**qu'**un engrenage (4) est compris pour l'entraînement simultané des deux pistons filetés (2, 3), de sorte qu'en alternance, un fonctionne en régime sous pression et que l'autre fonctionne en régime d'aspiration.

4. Pompe de lubrification (1) selon les revendications 2 et 3, **caractérisée en ce**
**que** l'engrenage (4) comprend un pignon d'entraînement (5) à l'aide duquel une première roue dentée (7) de piston associée au premier piston fileté (3) est entraînée, laquelle s'engrène avec une deuxième roue dentée (6) de piston qui est associée au deuxième piston fileté (2), de sorte que les deux pistons filetés (2, 3), avec des pas de vis des broches filetées (8, 9) allant dans le même sens, sont toujours automatiquement en rotation en sens inverse et de préférence avec des vitesses identiques, de sorte qu'en alternance, un piston fileté (2, 3) fonctionne en régime sous pression et que l'autre piston fileté (3, 2) fonctionne en régime d'aspiration.

5. Pompe de lubrification (1) selon les revendications 2 et 3, **caractérisée en ce**
**que** l'engrenage (4) comprend un pignon d'entraînement (5) avec lequel s'engrène une première roue dentée intermédiaire (36), laquelle à son tour s'engrène avec une première roue dentée (7) de piston associée au premier piston fileté (3) et avec une deuxième roue dentée intermédiaire (37), laquelle à son tour s'engrène avec une deuxième roue dentée (6) de piston qui est associée au deuxième piston fileté (2), de sorte que les deux pistons filetés (2, 3), avec des pas de vis des broches filetées (8, 9) allant dans le même sens, sont toujours automatiquement en rotation en sens inverse et de préférence avec des vitesses identiques, de sorte qu'en alternance, un piston fileté (2, 3) fonctionne en régime sous pression et que l'autre piston fileté (3, 2) fonctionne en régime d'aspiration.

6. Pompe de lubrification (1) selon la revendication 4 ou 5, **caractérisée en ce**
**que** le pignon d'entraînement (5) et les roues dentées (6, 7) de piston, ou, le cas échéant, les roues dentées intermédiaires (36, 37) et les roues dentées (6, 7) de piston ont une telle combinaison sur des longueurs axiales qu'ils/qu'elles sont en prise dans leurs écrous correspondants (12, 13) dans chaque position axiale finale des broches filetées (8, 9).

7. Pompe de lubrification (1) selon l'une quelconque des revendications précédentes, **caractérisée en ce que** les pistons filetés (2, 3) sont munis dans leurs zones terminales de piston (extrémités de travail 25 et 26) de joints (29) notamment élastiques, tels que de préférence des joints toriques, afin d'être étanchéifiés dans leur canal de distribution respectif (19, 20).

8. Pompe de lubrification (1) selon la revendication 7, **caractérisée en ce**
**que** pour chaque joint élastique (29), tel que de préférence pour chaque joint torique, une douille (30, 31) entourant le joint élastique (29) sur le piston fileté (2, 3) est ménagée et est disposée sur le piston fileté (2, 3) de manière à ce que le joint élastique (29), lorsqu'il est à l'extérieur du canal de distribution respectif (19, 20) en raison de la position axiale du piston fileté (2, 3) correspondant, se trouve alors en tout cas à l'intérieur de la douille correspondante (30, 31) lorsque l'introduction du joint élastique (29) dans le canal de distribution respectif (19, 20) est imminente, et en ce que chaque douille (30, 31) a un diamètre intérieur qui est au moins essentiellement identique au diamètre intérieur du canal de distribution correspondant (19, 20).

9. Pompe de lubrification (1) selon l'une quelconque des revendications précédentes, **caractérisée en ce que** pour chaque piston fileté (2, 3) est ménagé un canal de distribution (19, 20) dont la sortie de lubrifiant (21, 22) est munie d'un clapet anti-retour (23, 24) pour empêcher un flux en retour de lubrifiant dans le canal de distribution (19, 20) lors du fonctionnement en régime d'aspiration du piston fileté (2, 3) correspondant.

10. Pompe de lubrification (1) selon l'une quelconque des revendications précédentes, **caractérisée en ce que** pour chaque piston fileté (2, 3) est ménagé un canal de distribution (19, 20) dont l'orifice d'entrée (27, 28) vers la chambre d'aspiration (17, 18) respective ou commune aux deux pistons filetés (2, 3) est muni d'une rainure de décharge (34, 35).

11. Pompe de lubrification (1) selon l'une quelconque des revendications précédentes, **caractérisée en ce qu'**un moteur, tel que notamment un moteur électrique à courant continu, est ménagé, lequel comprend ou auquel est associée une commande d'inversion de sens de rotation, à laquelle est notamment associé un système capteur, au moyen duquel l'obtention d'au moins deux positions finales des, en tout, quatre positions finales des deux pistons filetés (2, 3) est détectable ou est détectée afin, en raison de la commande d'inversion de sens de rotation du moteur, de commander ce dernier à inverser le sens de rotation lorsqu'un piston fileté (2, 3) atteint une position finale.

12. Procédé d'alimentation en lubrifiant, dans lequel un premier piston fileté (3) fonctionne en régime d'aspiration pendant qu'un deuxième piston fileté (2) fonctionne en régime sous pression et vice versa,
et dans lequel les deux pistons filetés (2, 3) sont entraînés par l'intermédiaire d'un engrenage commun (4) qui comprend une roue dentée (6, 7) de piston pour chaque piston fileté (2, 3).

13. Procédé d'alimentation en lubrifiant selon la revendication 12, **caractérisé en ce**
**que** les roues dentées (6, 7) de piston s'engrènent l'une dans l'autre et sont ainsi en rotation en sens inverse, ou en ce que l'engrenage (4) comprend des roues dentées intermédiaires (6, 7) installées en amont des roues dentées (6, 7) de piston, lesquelles sont configurées de manière à ce que les roues dentées (6, 7) de piston soient ainsi en rotation en sens inverse.

14. Procédé d'alimentation en lubrifiant selon la revendication 12 ou 13, **caractérisé en ce**
**que** les pistons filetés (2, 3) sont munis dans leurs zones terminales de piston (extrémités de travail 25 et 26) de joints (29) notamment élastiques, tels que de préférence des joints toriques, afin d'être étanchéifiés dans leur canal de distribution respectif (19, 20), et en ce que les joints (29), avant leur entrée dans leur canal de distribution respectif (19, 20), sont respectivement précontraints à l'intérieur d'une douille (30, 31) entourant le piston fileté (2, 3) correspondant.

15. Procédé d'alimentation en lubrifiant selon l'une quelconque des revendications 12 à 14,
**caractérisé en ce**
lors de l'entrée d'un piston fileté (2, 3) dans son canal de distribution (19, 20) en régime sous pression, une détente de pression a lieu par l'intermédiaire d'une rainure de décharge (34, 35) sur le bord de l'embouchure (27, 28) du canal de distribution (19, 20) en direction de la chambre d'aspiration (18, 18) respective ou commune aux deux pistons filetés (2, 3).
